# EUROPÄISCHE PATENTSCHRIFT

(11) **EP 0 302 814 B1**
(45) Veröffentlichungstag und Bekanntmachung des Hinweises auf die Patenterteilung: **16.02.1994**
(21) Anmeldenummer: 88730118.2
(22) Anmeldetag: 17.05.1988
(51) Int. Cl.: H01R 9/24, H01R 4/24

(54) **Anschlussleiste der Fernmeldetechnik**
Terminal block for the telecommunication technique
Barrette de raccordement pour la technique des télécommunications

(30) Priorität: 07.08.1987 DE 3726741
(43) Veröffentlichungstag der Anmeldung: 08.02.1989
(73) Patentinhaber: KRONE Aktiengesellschaft, D-14167 Berlin (DE)
(72) Erfinder: Teichler, Heide, D-1000 Berlin 62 (DE); Müller, Manfred, D-1000 Berlin 65 (DE)
(74) Vertreter: Lüke, Dierck-Wilm, Dipl.-Ing.

(56) Entgegenhaltungen:
- DE-A- 2 716 700
- DE-A- 2 804 478
- DE-A- 2 811 812
- DE-A- 3 024 307

## Beschreibung

Die Erfindung bezieht sich auf eine Anschlußleiste der Fernmeldetechnik, gemäß dem Oberbegriff des Anspruches 1.

Eine Anschlußleiste der gattungsgemäßen Art ist aus der DE-PS 28 04 478 vorbekannt. Diese besteht aus einer Trägerplatte und aus einem auf die Trägerplatte aufrastbaren Oberteil. Trägerplatte und Oberteil sind aus Kunststoff hergestellt. In die Trägerplatte sind mehrere Anschlußelemente mit jeweils zwei Schneid-Klemmkontakten einsteckbar, die in das Oberteil hineinragen. Das Oberteil besitzt an seiner Gehäuseoberseite mehrer Klemmelemente mit dazwischenliegenden schlitzförmigen Öffnungen. Die Schneid-Klemmkontakte bestehen jeweils aus zwei blattförmigen federnden Kontaktschenkeln, zwischen denen ein Kontaktschlitz gebildet wird. Der nach oben offene Kontaktschlitz des in der Anschlußleiste eingebetteten Schneid-Klemmkontaktes ist von oben zugänglich, aufgrund der schlitzförmigen Öffnung des Oberteiles. Da sehr enge Toleranzen zwischen der Trägerplatte und dem aufrastbaren Oberteil eingehalten werden müssen, sind nur Anschlußleisten kleiner Längen mit vertretbarem technischem Fertigungsaufwand herstellbar, da sich bei größeren Längen eventuelle Toleranzabweichungen addieren. Darüber hinaus sind die Herstellungskosten sehr langer Oberteile für Anschlußleisten aufgrund der erforderlichen großen Spritzgußwerkzeuge sehr hoch.

Nach DE-PS 28 11 812 werden daher Anschlußleisten mit kleinen Längen, die zehn Doppeladeranschlüsse (10 DA) aufweisen, auf einen Montagebügel aufgerastet.

Der Erfindung liegt von daher die Aufgabe zugrunde, eine Anschlußleiste der gattungsgemäßen Art zu schaffen, die eine größere Länge besitzt und daher mehr als 10 DA aufnehmen kann, ohne daß die Gefahr der Addition von Toleranzfehlern besteht und ohne daß der Fertigungsaufwand erhöht wird.

Die Lösung dieser Aufgabe ergibt sich aus den kennzeichnenden Merkmalen des Anspruches 1. Erfindungsgemäß werden die Toleranzwerte einer längeren Anschlußleiste nur auf eine Teilleiste bezogen. Vorteilhaft läßt sich die Anschlußleiste fertigungstechnisch kostengünstig herstellen, da für die Herstellung der Teilleisten nur kleine Spritzgußwerkzeuge benötigt werden.

Weitere vorteilhafte Ausgestaltungen der Erfindung ergeben sich aus den Unteransprüchen. So können auch zwei Reihen von Teilleisten nebeneinander auf einer Trägerplatte angeordnet sein, wobei eine gemeinsame Erdschiene für den Erdanschluß dient.

Die Erfindung ist nachfolgend anhand eines in den Zeichnungen dargestellten Ausführungsbeispieles einer Anschlußleiste näher erläutert. Es zeigt:
- Fig. 1: eine Perspektivansicht der Anschlußleiste,
- Fig. 2: einen Querschnitt durch die Anschlußleiste und
- Fig. 3: eine Draufsicht auf die Trägerplatte der Anschlußleiste mit teilweiser Darstellung zweier Teilleisten.

Die Anschlußleiste besteht aus einer rechteckförmigen Trägerplatte 1 und aus mehreren identisch ausgebildeten Teilleisten 3 bis 7, die hintereinander in zwei Reihen auf die Trägerplatte 1 aufgerastet sind. Trägerplatte 1 und Teilleisten 3 bis 7 sind aus Kunststoff hergestellt. Die Teilleisten 3 bis 7 sind identisch mit den Oberteilen nach DE-PS 28 04 478 ausgebildet.

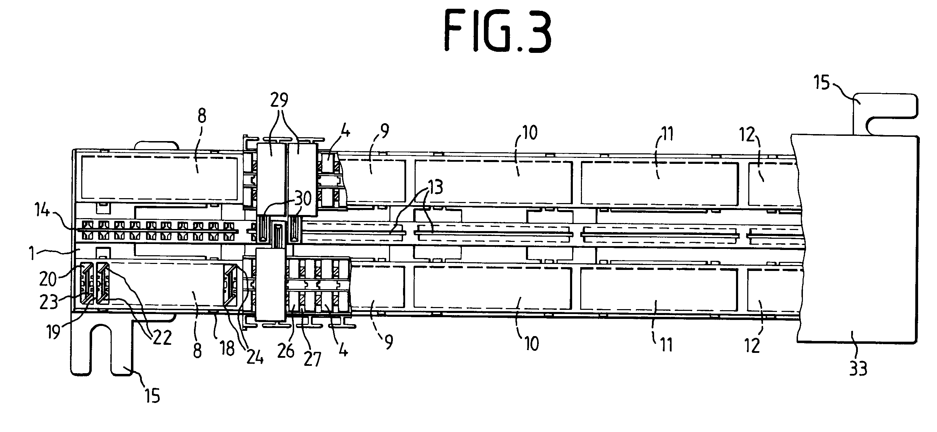

Die Trägerplatte 1 besitzt mehrere, in zwei Reihen hintereinander angeordnete Aufnahmekammern 8 bis 12 für die jeweiligen Teilleisten 3 bis 7. In jeder Aufnahmekammer 8 bis 12 sind mehrere Querwände 19 vorgesehen, welche die Aufnahmekammern 8 bis 12 wiederum in mehrere einzelne Teilkammern 20 zur Aufnahme von Anschlußelementen 23 unterteilen. In den sich diagonal gegenüberliegenden Ecken jeder Teilkammer 20 sind zwei Aufnahmeschlitze 24 für Schneid-Klemmkontakte 22 eingearbeitet. Die Anschlußelemente 23, die jeweils zwei zur Querachse unter 45° stehende Schneid-Klemmkontakte 22 aufweisen, sind aufrecht stehend in die Teilkammern 20 eingesteckt, wobei jeweils ein Kontaktschenkel 21 der beiden Schneid-Klemmkontakte 22 eines Anschlußelementes 23 im Aufnahmeschlitz 24 klemmend gehalten ist. In den zehn Teilkammern 20 einer Aufnahmekammer 8 bis 12 sind somit zehn Anschlußelemente 23 für fünf Doppeladern aufgenommen. In Fig. 3 sind in der linken Aufnahmekammer 8 drei Teilkammern 20 gezeigt. Die Aufnahmekammern 8 bis 12 sind insoweit identisch mit den Unterteilen nach DE-PS 28 04 478 ausgebildet.

Auf die aufrecht stehenden Anschlußelemente 23 einer Aufnahmekammer 8 bis 12 ist eine Teilleiste 3 bis 7 aufgeschoben. Im Gehäuseinneren der Teilleiste 3 bis 7 sind ebenfalls mehrere, durch Querwände 19′ getrennte, mit Aufnahmeschlitzen 24′ versehene Teilkammern 20′ vorgesehen. Vier außen an der äußeren Wandung 16 der Aufnahmekammern 8 bis 12 vorgesehenen Rastsegmente 18 rasten in Rastvertiefungen 17 der Wandung der Teilleisten 3 bis 7 ein.

Fünf Teilleisten 3 bis 7 mit je fünf Doppeladeranschlüssen sind in jeder der beiden Reihen hintereinander auf der Trägerplatte 1 zur Bildung der Anschlußleiste aufgerastet, die somit insgesamt 50 Doppeladeranschlüsse umfaßt.

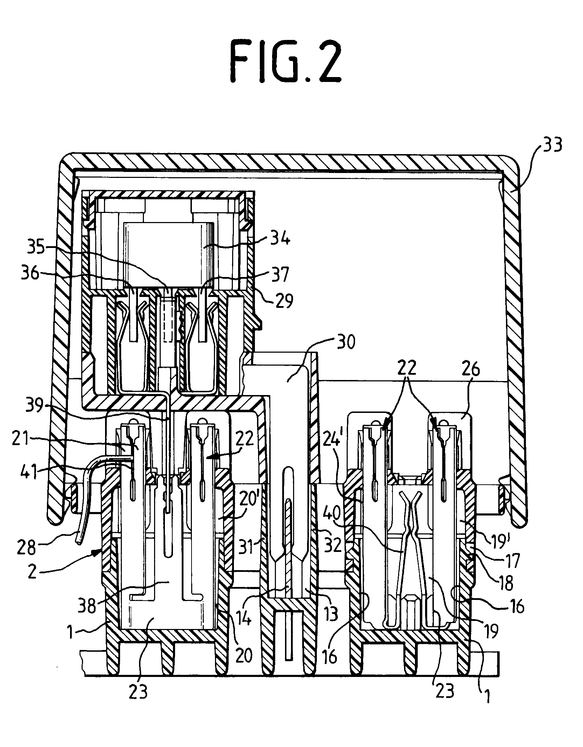

An der Oberseite 25 der Teilleiste 3 bis 7 sind Klemmelemente 26 mit dazwischenliegenden Klemmschlitzen 27 für die Kabeladern 28 vorgesehen. Durch den Klemmschlitz 27 ist jeweils ein nach oben offener Kontaktschlitz 41 des Schneid-Klemmkontaktes 22 von oben zugänglich. Zum Anschluß einer isolierten Kabelader 28 an das Anschlußelement 23 wird die Kabelader 28 zuerst in den Klemmschlitz 27 eingelegt und dann mit Hilfe eines nicht dargestellten Werkzeuges in den Kontaktschlitz 41 des Schneid-Klemmkontaktes 2 eingedrückt, wobei die den Kontaktschlitz 41 begrenzenden scharfen Kanten der unter 45° zur Querachse stehenden Kontaktschenkel 21 zuerst die Isolation durchschneiden und dann in den leitenden Kern der Kabelader 28 eindringen. Die Anschlußelemente 23 besitzen mittig entweder einen Abgriff 38 oder einen Trennkontakt 40, Fig. 2.

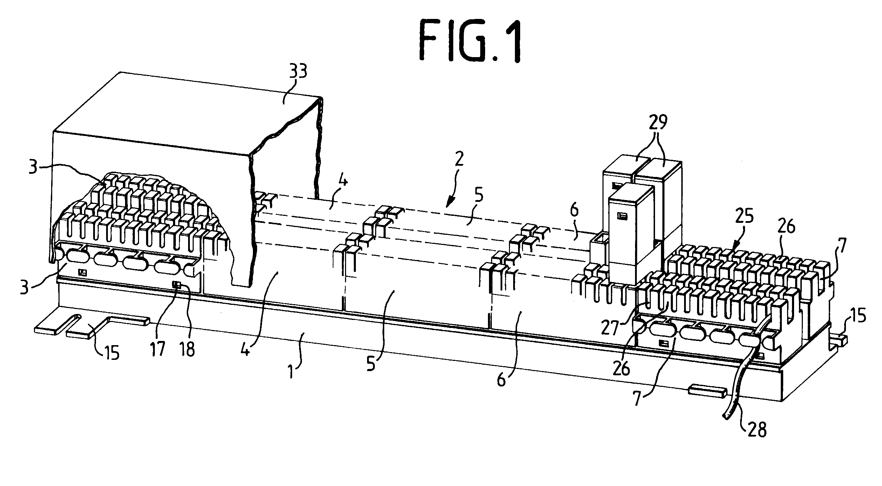

Wie es in den Figuren 1 und 2 dargestellt ist, sind zwei Reihen von Teilleisten 3 bis 7 parallel zueinander auf der Trägerplatte 1 montiert. Zwischen den beiden Reihen ist in der Tägerplatte 1 eine parallel zu den Reihen verlaufende Nut 13 vorgesehen, in die eine metallische Erdschiene 14 eingesteckt ist. Die Erdschiene 14 ist beidseitig von die Nut 13 begrenzenden Kunststoffwänden 31, 32 berührungssicher in der Trägerplatte 1 gelagert. Die Erdschiene 14 ist mit einem nicht dargestellten Erdpotential verbunden und dient als Erdabgriff für die in die Teilleisten 3 bis 7 einsteckbaren Überspannungsableiter-Stecker 29, die hierzu einen Gabelkontakt 30 aufweisen, der auf die Erdschiene 14 aufgesteckt ist. Im Inneren des Gehäuses jedes Steckers 29 ist ein 3-Pol-Überspannungsableiter 34 angeordnet, dessen Mittelkontakt 35 mit dem Gabelkontakt 30 und dessen Außenkontakte 36, 37 über Kontaktzungen 39 jeweils mit einem mittleren Abgriff 38 des Anschlußelementes 23 verbunden sind. Mit Hilfe eines Steckers 29 werden zwei an zwei Anschlußelementen 23 angeschlossene Kabeladern 28 im Überspannungsfall auf Erdpotential geschaltet.

Zur Befestigung der Anschlußleiste an einem Gestell, insbesondere Verteilergestell, sind an den Längsseiten der Trägerplatte 1 an gegenüberliegenden Enden Befestigungslaschen 15 zur Aufnahme von nicht dargestellten Befestigungsschrauben vorgesehen.

Zum Schutz vor Staub ist über die Anschlußleiste eine Kappe 33 auf die Trägerplatte 1 aufgerastet.

Die Anschlußleiste kann mit Anschlußelementen 23 mit einem Abgriff 38 oder als Trennleiste mit Anschlußelementen 23 mit einem Trennkontakt 40 bestückt sein, so daß die Anschlußleiste auch als Trennleiste verwendet werden kann.

## Patentansprüche

1. Anschlußleiste der Fernmeldetechnik
aus einer Trägerplatte (1) aus Kunststoff mit einem Steckraster aus von Seiten- und Querwänden begrenzten Aufnahmekammern (8 - 12) und
aus einem auf die Trägerplatte aufrastbaren leistenförmigen Oberteil (2) aus Kunststoff,
wobei in das Oberteil und auf die Trägerplatte Anschlußelemente (23) einsteckbar bzw. aufsteckbar sind,
**dadurch gekennzeichnet,**
daß das Oberteil (2) aus mehreren Teilleisten (3 bis 7) gebildet ist und
daß für jede Teilleiste (3 bis 7) auf der Trägerplatte (1) eine Aufnahmekammer (8 bis 12) Vorgesehen ist,
wobei die Aufnahmekammern (8 bis 12) für mehrere Teilleisten hintereinander angeordnet sind.

2. Anschlußleiste nach Anspruch 1, dadurch gekennzeichnet, daß in der Trägerplatte (1) zwei parallele Reihen von Aufnahmekammern (8 bis 12) angeordnet sind.

3. Anschlußleiste nach einem der Ansprüche 1 oder 2, dadurch gekennzeichnet, daß die Aufnahmekammern (8 bis 12) der Trägerplatte (1) in mehrere einzelne Teilkammern (20) zur Aufnahme der Anschlußelemente (23) unterteilt sind.

4. Anschlußleiste nach einem der Ansprüche 1 bis 3, dadurch gekennzeichnet, daß in der Trägerplatte (1) parallel zur Reihe der Aufnahmekammern (8 bis 12) eine Nut (13) zur Aufnahme einer metallischen Erdschiene (14) ausgebildet ist.

5. Anschlußleiste nach Anspruch 4, dadurch gekennzeichnet, daß die Nut (13) für die Erdschiene (14) mittig zwischen den beiden Reihen von Aufnahmekammern (8 bis 12) angeordnet ist.

6. Anschlußleiste nach einem der Ansprüche 1 bis 5, dadurch gekennzeichnet, daß an gegenüberliegenden Enden der Längsseiten der Trägerplatte (1) Befestigungslaschen (15) zur Befestigung an einem Verteilergestell ausgebildet sind.

7. Anschlußleiste nach einem der Ansprüche 1 bis 6, dadurch gekennzeichnet, daß außen an den Wandungen (16) der Aufnahmekammern (8 bis 12) Rastsegmente (18) vorgesehen sind, die in Rastvertiefungen (17) der Teilleisten (3 bis 7) eingreifen.

## Claims

1. A terminal block for the telecommunication technique, comprising a support plate (1) of plastic with a plug pattern of reception chambers (8 to 12) limited by side and transverse walls, and a block-type upper portion (2) of plastic to be latched onto the support plate, into the upper portion and onto the support plate termination elements (23) being insertable or pluggable, resp., characterized by that the upper portion (2) is formed of several partial blocks (3 to 7), and that for each partial block (3 to 7), a reception chamber (8 to 12) is provided on the support plate (1), the reception chambers (8 to 12) for several partial blocks being disposed behind each other.

2. A terminal block according to claim 1, characterized by that in the support plate (1), two parallel rows of reception chambers (8 to 12) are disposed.

3. A terminal block according to claim 1 or 2, characterized by that the reception chambers (8 to 12) of the support plate (1) are subdivided into several individual partial chambers (20) for receiving the termination elements (23).

4. A terminal block according to one of claims 1 to 3, characterized by that in the support plate (1), in parallel to the row of reception chambers (8 to 12), a groove (13) for receiving a metal earthing rail (14) is formed.

5. A terminal block according to claim 4, characterized by that the groove (13) for the earthing rail (14) is disposed centrally between the two rows of reception chambers (8 to 12).

6. A terminal block according to one of claims 1 to 5, characterized by that at the opposite ends of the longitudinal sides of the support plate (1), fixing lugs (15) for fixing to a distributor frame are formed.

7. A terminal block according to one of claims 1 to 6, characterized by that outside at the walls (16) of the reception chambers (8 to 12), latch segments (18) are provided, which engage into latch depressions (17) of the partial blocks (3 to 7).

## Revendications

1. Barrette de raccordement pour la technique des télécommunications
comprenant une plaque support (1) en matière synthétique avec une trame enfichable de compartiments de réception (8-12) limitée par des parois latérales et transversales et
une partie supérieure (2) en forme de barrette et en matière synthétique, pouvant être crantée sur la plaque support, des éléments de raccordement (23) pouvant être enfichés ou emboîtés sur la plaque support,
**caractérisée en ce que**
la partie supérieure (2) est formée de plusieurs barrettes partielles (3 à 7) et
que pour chaque barrette partielle (3 à 7) un compartiment de réception 8 à 12 est prévu sur la plaque support (1), les compartiments de réception (8 à 12) étant disposés les uns derrière les autres pour plusieurs barrettes partielles.

2. Barrette de raccordement selon la revendication 1, caractérisée en ce que deux rangées parallèles de compartiments de réception (8 à 12) sont disposées dans la plaque support (1).

3. Barrette de raccordement selon l'une des revendications 1 ou 2, caractérisée en ce que les compartiments de réception (8 à 12) de la plaque support (1) sont départagés en plusieurs compartiments partiels séparés (20) pour recevoir les éléments de raccordement (23).

4. Barrette de raccordement selon l'une des revendications 1 à 3, caractérisée en ce qu'une rainure (13) pour recevoir une barre de mise à la terre (14) est pratiquée dans la plaque support (1) parallèle à la rangée des compartiments de réception (8 à 12).

5. Barrette de raccordement selon la revendication 4, caractérisée en ce que la rainure (13) pour la barre de mise à la terre (14) est disposée au milieu entre les deux rangées de compartiments de réception (8 à 12).

6. Barrette de raccordement selon l'une des revendications 1 à 5, caractérisée en ce que des colliers de fixation (15) sont pratiqués sur des extrémités opposées des côtés longitudinaux de la plaque support (1) pour la fixation sur un répartiteur.

7. Barrette de raccordement selon l'une des revendications 1 à 6, caractérisée en ce que des segments d'arrêt (18) sont prévus à l'extérieur des parois (16) des compartiments de réception (8 à 12) qui engrènent dans des gorges d'arrêt (17) des compartiments partiels (3 à 7).
